(19) Europäisches Patentamt
European Patent Office
Office européen des brevets

(11) **EP 3 202 746 A1**

(12) **EUROPEAN PATENT APPLICATION**

(43) Date of publication:
09.08.2017 Bulletin 2017/32

(51) Int Cl.:
*C04B 35/462* [(2006.01)]  *C04B 35/468* [(2006.01)]
*C04B 35/626* [(2006.01)]  *H01C 7/02* [(2006.01)]

(21) Application number: 17154799.5

(22) Date of filing: 06.02.2017

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: 08.02.2016  JP 2016021462

(71) Applicant: **TDK Corporation
Tokyo 108-0023 (JP)**

(72) Inventors:
• **Fujita, Kazutaka
Tokyo 108-0023 (JP)**

• **Itoh, Kazuhiko
Tokyo 108-0023 (JP)**
• **Shimura, Yoshikazu
Tokyo 108-0023 (JP)**
• **Morikoshi, Hiroki
Tokyo 108-0023 (JP)**
• **Terada, Tomohiro
Tokyo 108-0023 (JP)**

(74) Representative: **Epping - Hermann - Fischer
Patentanwaltsgesellschaft mbH
Schloßschmidstraße 5
80639 München (DE)**

(54) **SEMICONDUCTOR CERAMIC COMPOSITION AND PTC THERMISTOR**

(57)    A semiconductor ceramic composition represented by formula (1),

$$(Ba_vBi_xA_yRE_w)_m(Ti_uTM_z)O_3 \qquad (1),$$

wherein, A represents at least one element selected from Na and K, RE represents at least one element selected from Y, La, Ce, Pr, Nd, Sm, Gd, Dy and Er;

$$0.750y \leq x \leq 1.50y \quad (2),$$

$$0.007 \leq y \leq 0.125 \quad (3),$$

$$0 \leq (w+z) \leq 0.010 \quad (4),$$

$$v+x+y+w=1 \quad (5),$$

$$u+z=1 \quad (6),$$

$$0.950 \leq m \leq 1.050 \quad (7),$$

0.001 to 0.055 mol of Ca is contained, and 0.0005 to 0.005 mol of at least one selected from Mg, Al, Fe, Co, Cu and Zn is contained.

EP 3 202 746 A1

**Fig.1**

## Description

The present invention relates to a semiconductor ceramic composition and a PTC thermistor which may be used in a heater element or an overheat detection element and the like.

BACKGROUND

As one of thermistors, a PTC (Positive Temperature Coefficient) thermistor with a positive temperature coefficient of resistance has been known. The resistance in the PTC thermistor increases as the temperature rises, so the PTC thermistor is used as a self-controlling heater element, an over-current protection element, an element for detecting overheats or the like. In the past, the PTC thermistor has been obtained by adding a minute amount of rare earth elements and the like to barium titanate ($BaTiO_3$) which is the main component to form a semiconductor. Although it has a low resistance under a temperature below the Curie point; it will be sharply increased by several orders of magnitude above the Curie Point.

Usually, the Curie point of $BaTiO_3$ is about 120°C. When part of Ba and Ti are replaced by Sr or Sn and Zr, the Curie point will shift to a lower temperature. In addition, the Curie point will shift to a higher temperature by replacing part of Ba by Pb. Especially, since the PTC thermistor used as a heater element is used under a high temperature, it is required to have a high Curie point. From the view point of the trend of decreasing the environmental load of the world, practical application of a replacement material without using Pb has been demanded.

A method for preparing a semiconductor ceramic composition has been disclosed in the following Patent Document 1. In particular, one or more selected from Nb, Ta or rare earth elements is added to a composition composed of $Ba_{1-2x}(BiNa)_xTiO_3$ ($0<X\leq0.15$) which is formed by replacing part of Ba with (BiNa) rather than Pb. The resultant mixture is sintered in a nitrogen atmosphere and then subjected to a thermal treatment in an oxidative atmosphere.

In addition, a method for producing a semiconductor ceramic composition has been disclosed in the following Patent Document 2. In particular, for the semiconductor ceramic composition obtained by replacing part of Ba in $BaTiO_3$ by Bi and alkali metal A1 (i.e., at least one selected from Na, K and Li), a method for suppressing the resistance change rate after electrifying for a long time is applied, wherein, the measured density relative to the theoretical density (referred to as "relative density" hereinafter) of the sintered body of the above mentioned composition is set to be 70~90%.

It has been described in any one of these Patent Documents that a semiconductor ceramic composition as follows could be provided. The semiconductor ceramic composition is Pb free and has its Curie point shifted to a temperature higher than 120°C as well as a small resistivity at 25°C.

Patent Documents

Patent Document 1: JP-A-S56-169301

Patent Document 2: JP-A-2012-209292

SUMMARY

In Patent Document 1, it has been described about the results of the case in which after Nd is added into the composition composed of $Ba_{1-2x}(BiNa)_xTiO_3$ ($0<X\leq0.15$) and the resultant mixture is subjected to a sintering process in a nitrogen atmosphere, then a thermal treatment under an oxidative atmosphere is applied. However, there is no detailed description about the case with other donors. Also, it is not clear whether the properties have been improved based on the effect of the additive agent or to what extent the properties have been improved. Moreover, as the composition cannot turn semiconductive if the sintering process is performed in air, a problem rises that the preparation cost will increase compared to the case where the sintering process is performed in air.

On the other hand, the resistance change rate $\Delta\rho/\rho_0$ of the semiconductor ceramic composition described in the above Patent Document 2 can be suppressed to be 28% by adjusting the relative density of the sintered body to be 70~90%, while the resistance change rate $\Delta\rho/\rho_0$ is 67% in the case without adjusting. However, it is desired to have a further decreased value in practical use.

In addition, in the above Patent Document 2, the resistance change rate $\Delta\rho/\rho_0$ is defined as follows. That is, as the electrical current test, a DC voltage of 20V is applied for 1000 hours and then the resistivity before test $\rho_0$ and the resistivity after test $\rho_1$ are measured at an environmental temperature of 25°C to obtain the difference $\Delta\rho$ ($=\rho_1-\rho_0$), and thereby the resistance change rate $\Delta\rho/\rho_0$ can be calculated.

The resistivity at 25°C of the PTC thermistor is required to be low from the viewpoint of energy saving. However, the PTC thermistor usually deteriorates over time with being energized for a long term, and the resistivity at 25°C tends to increase, so the resistance change rate $\Delta\rho/\rho_0$ is one of the important indexes for ensuring reliability of the PTC thermistor.

Meanwhile, in a PTC heater which can be equipped in an electric vehicle whose demand will be increased in the future, a high voltage is applied without using a transformer, thus, an excellent withstand voltage is required for the PTC heater.

Therefore, the present invention aims to provide a semiconductor ceramic composition and a PTC thermistor including the semiconductor ceramic composition, whose Curie point is shifted to a temperature higher than 120°C, can readily turn semiconductive no matter it is sintered in air or in a nitrogen atmosphere. Also, the resistivity at 25°C can be kept at a level capable of practically using while the resistance change rate $\Delta\rho/\rho_0$ is low. Further, the semiconductor ceramic composition has an excellent withstand voltage.

The inventors of the present invention have carried on various studies in order to solve the above problem. As the results, the inventors of the present invention found that, the $BaTiO_3$ based semiconductor ceramic composition can easily turn semiconductive no matter it is sintered in air or in a nitrogen atmosphere by replacing part of Ba with a specified amount of Bi and alkali metal(s) (at least one selected from Na or K) rather than Pb and adjusting the molar ratio of Ba site to Ti site, the adding amount of Ca and the adding amount of M (at least one of Mg, Al, Fe, Co, Cu, Zn) rather than Ca to specified ranges. The resistivity at 25°C can be suppressed to be 500Ωcm or lower, the resistance change rate $\Delta\rho/\rho_0$ can be suppressed to be 20% or lower, while the withstand voltage $V_0$ is 400V/mm or more, and the Curie point shifts to a temperature higher than 120°C.

That is, the semiconductor ceramic composition of the present invention is characterized in that it can be represented by the following formula (1),

$$(Ba_vBi_xA_yRE_w)_m(Ti_uTM_z)O_3 \qquad (1),$$

in formula (1), A represents at least one element selected from the group consisting of Na and K, RE represents at least one element selected from the group consisting of Y, La, Ce, Pr, Nd, Sm, Gd, Dy and Er, TM represents at least one element selected from the group consisting of V, Nb and Ta, and u, v, w, x, y, z and m satisfy the following formulas (2) to (7),

$$0.750y \leq x \leq 1.50y \qquad (2)$$

$$0.007 \leq y \leq 0.125 \qquad (3)$$

$$0 \leq (w+z) \leq 0.010 \qquad (4)$$

$$v+x+y+w=1 \qquad (5)$$

$$u+z=1 \qquad (6)$$

$$0.950 \leq m \leq 1.050 \qquad (7)$$

and further Ca is contained in a ratio of 0.001mol or more and 0.055mol or less in terms of element relative to 1mol of Ti site (i.e., the total molar number of Ti and TM); and the additive M (at least one selected from Mg, Al, Fe, Co, Cu, and Zn) is contained in a ratio of 0.0005mol or more and 0.005mol or less in terms of element.

The inventors of the present invention consider the reason why the semiconductor ceramic composition shows such properties is as follows. By adjusting the adding amount of Bi and the alkali metal A (at least one selected from Na or K) and its ratio to specified ranges, part of Bi will promote the composition turning semiconductive and part of A will function as sintering aids to promote a proper growth of grains. As the results, a semiconductor ceramic composition with a low resistance can be obtained no matter it is sintered in air or in a nitrogen atmosphere and its Curie point shifts to a temperature higher than 120°C. Further, they consider that grain will be promoted to grow uniformly by setting the additive amount of Ca and M (at least one of Mg, Al, Fe, Co, Cu, and Zn) to be a specified range, and a semiconductor ceramic composition can be obtained of which the resistivity at 25°C can be suppressed to be 500Ωcm or lower, the resistance change rate $\Delta\rho/\rho_0$ is 20% or lower, the withstand voltage $V_0$ is 400V/mm or above, and a Curie point shifts to a temperature higher than 120°C. However, the mechanism of turning semiconductive is not limited to those mentioned above.

Moreover, it is preferred that the semiconductor ceramic composition contains Si in a ratio of 0.035mol or less in terms of element relative to 1mol of Ti site (i.e., the total molar number of Ti and TM). If Si is contained within the range mentioned above, the effect of decreasing the resistivity at 25°C will be improved.

Besides, it is preferred that the semiconductor ceramic composition further contains Mn in a ratio of 0.0015mol or less in terms of element relative to 1mol of Ti site (i.e., the total molar number of Ti and TM). If Mn is contained within the range mentioned above, an effect on increasing the ratio of the resistivity at room temperature and the increased resistivity above the Curie temperature (referred to as "PTC jump" hereinafter for convenience) will be provided. In addition, the PTC jump is an index for estimating the performance of the PTC thermistor, and it can be calculated from $Log_{10}$(resistivity at 280°C / resistivity at 25°C).

According to the present invention, a semiconductor ceramic composition whose Curie point is shifted to a temperature higher than 120°C and a PTC thermistor comprising the same can be obtained, wherein, the semiconductor ceramic composition can readily turn semiconductive no matter it is sintered in air or in a nitrogen atmosphere and its resistivity at 25°C can be kept at a level of be capable of practically using while its resistance change rate $\Delta\rho/\rho_0$ is small and its withstand voltage is excellent. The PTC thermistor comprising the semiconductor ceramic composition can be expected to be applied into a heater element or an element for detecting overheats.

BRIEF DESCRIPTION OF THE DRAWINGS

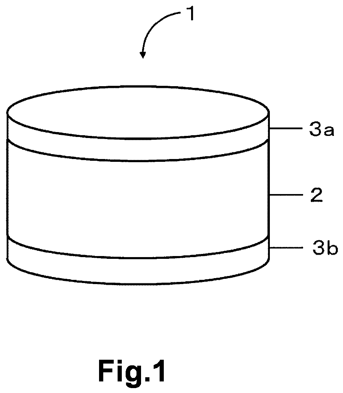

Figure 1 is a perspective view showing a structure of the PTC thermistor comprising the semiconductor ceramic composition according to one embodiment of the present invention.

DETAILED DESCRIPTION OF EMBODIMENTS

As shown in Figure 1, PTC thermistor 1 includes ceramic body 2 and electrodes 3a and 3b which are formed on two opposite main surfaces of ceramic body. The electrodes 3a and 3b can be formed with a single-layered structure or a multi-layered structure which is made of conducting material(s) such as Cu, Ni, Al, Cr, Zn, Ag, Ni-Cr alloy, Ni-Cu alloy, or the like.

The composition of the present invention can be represented by the following formula (1) according to the molar ratio.

$$(Ba_v Bi_x A_y RE_w)_m (Ti_u TM_z)O_3 \qquad (1)$$

In formula (1), A represents at least one element selected from the group consisting of Na or K, RE represents at least one element selected from the group consisting of Y, La, Ce, Pr, Nd, Sm, Gd, Dy and Er, and TM represents at least one element selected from the group consisting of V, Nb and Ta. Further, the composition further contains Ca and the additive M (at least one of Mg, Al, Fe, Co, Cu and Zn) as the sub-component.

In formula (1), v, x, y, w, u, z and m satisfy the following formulas (2) to (7), wherein v, x, y, w, u, z and m respectively represent the amounts of Bi, A and RE to replace part of Ba site, the amount of TM to replace part of Ti site, and the ratio of Ba site to Ti site.

$$0.750y \leq x \leq 1.50y \qquad (2)$$

$$0.007 \leq y \leq 0.125 \qquad (3)$$

$$0 \leq (w+z) \leq 0.010 \qquad (4)$$

$$v+x+y+w=1 \qquad (5)$$

$$u+z=1 \qquad (6)$$

$$0.950 \leq m \leq 1.050 \qquad (7)$$

Further, relative to the composition represented by formula (1), Ca is contained in a ratio of 0.001mol or more and 0.055mol or less in terms of element relative to 1mol of Ti site (the total molar number of Ti and TM), and M (at least one of Mg, Al, Fe, Co, Cu and Zn) is contained in a ratio of 0.0005mol or more and 0.005mol or less in terms of element relative to 1mol of Ti site.

Moreover, the semiconductor ceramic composition preferably further contains Si in a ratio of 0.035mol or less in terms of element relative to 1mol of Ti site (i.e., the total molar number of Ti and TM) in the formula (1). Further, the ratio is more preferable to be 0.005mol or more and 0.020mol or less. The Si precipitated at the grain boundary can respectively form compounds with the alkali metal Na and K which are also precipitated in a trace amount at the grain boundary, and thus can prevent the movement of the alkali metal Na and K ion when electrified. Thereby, the effect of decreasing the resistivity at 25°C is further improved. However, if more than 0.035mol of Si is contained, the excess element Si will segregate in a large quantity at the grain boundary so that the movement of conduction electrons will be inhibited and the resistivity at 25°C tends to increase.

In addition, the semiconductor ceramic composition preferably further contains Mn in a ratio of 0.0015mol or less in terms of element relative to 1mol of Ti site (i.e., the total molar number of Ti and TM). Further, the ratio is more preferred to be 0.0002mol or more and 0.0010mol or less. If Mn is contained within the range mentioned above, a proper acceptor level will be formed at the grain boundary so that PTC jump will be improved. However, if more than 0.0015mol of Mn is contained, the trap for the conduction electrons will be excess so that the resistivity at 25°C tends to increase.

In formula (1), A represents at least one element selected from the group consisting of Na and K. The y representing the range of A is preferred to be $0.007 \leq y \leq 0.125$. If y is less than 0.007, the Curie point will not shift to a higher temperature. In addition, it is not preferred to render y higher than 0.125 because the ceramic composition will not completely become semiconductive and the resistivity at 25°C will be higher than 500Ωcm. In addition, the Curie point of the present invention refers to the temperature at which the resistivity of the element is twice as high as that at 25°C.

In addition, in the formula mentioned above, x representing the range of element Bi is related to y representing the range of A, and it is preferred that $0.750y \leq x \leq 1.50y$. If x is less than 0.750, the Curie point will not shift to a higher temperature. Additionally, it is not preferred to render x higher than 1.50 because excess element Bi will precipitate in a large quantity at the grain boundary, the movement of the conduction electrons will be prevented, the ceramic composition will not completely become semiconductive, and the resistivity at 25°C will be higher than 500cm.

In the cases that the alkali metallic element A is Na or K, the shifting amounts of the Curie temperature towards a higher temperature are different, while the resistivity at 25°C or the resistance change rate are almost the same.

In addition, in the compositional formula mentioned above, there is an effect on decreasing the resistivity at 25°C and increasing the withstand voltage when the total amount (w+z) of RE and TM which two are the donor components is 0.010mol or less relative to 1mol of Ti site (i.e., the total molar number of Ti and TM), but it will also work if neither RE nor TM is contained. Further, the mentioned total amount is more preferred to be 0.001mol or more and 0.005mol or less. In addition, if (w+z) is higher than 0.010, the excess RE or TM will segregate at the grain boundary to prevent the movement of the conduction electrons, which leads to a resistivity at 25°C higher than 500Ωcm. Thus, it is not preferable. Further, it is more preferred that RE is selected from the group consisting of Sm, Gd and Er; and Nb is selected as TM. More preferably, RE (Sm, Gd, Er) and TM (Nb) are added in equal amounts. With such types of donor and adding methods, the effect on decreasing the resistivity at 25°C will be further improved.

In the compositional formula mentioned above, m is preferred to be in the range of $0.950 \leq m \leq 1.050$. If m is less than 0.950, the ceramic composition will not completely become semiconductive and the resistivity at 25°C will be higher than 500Ωcm, and thus it is not preferable. In addition, m is not preferred to be higher than 1.050 because the sintered density will decrease and the withstand voltage $V_0$ will drop to be less than 400V/mm. Preferably, when m is in the range of $0.980 \leq m \leq 1.050$, the effect on decreasing the resistivity at 25°C will be further improved.

In addition, relative to the compositional formula mentioned above, the range of Ca which is added as a sub-component falls within the range of 0.001mol or more and 0.055mol or less relative to 1mol of Ti site (the total molar number of Ti and TM). If the range of Ca is less than 0.001mol, the ceramic composition will not turn semiconductive sufficiently and the resistivity at 25°C will be higher than 500Ωcm. In addition, when more than 0.055mol of Ca is contained, the sintered density will decrease and the withstand voltage $V_0$ will drop. More preferably, Ca is contained in a range of 0.010mol or more and 0.040mol or less. In this way, the resistivity at 25°C can be further decreased.

Further, relative to the compositional formula mentioned above, the range of M (at least one of Mg, Al, Fe, Co, Cu and Zn) which is added as a sub-component is preferred to be 0.0005mol or more and 0.005mol or less relative to 1mol of Ti site (the total molar number of Ti and TM). It is not preferable to contain less than 0.0005mol of M because the resistance change rate $\Delta\rho/\rho_0$ will become over 20%. Besides, if the range of M is more than 0.005mol, the ceramic composition will not completely become semiconductive and the resistivity at 25°C will be higher than 500Ωcm, and thus it is not preferable.

The semiconductor ceramic composition having the above mentioned properties can be prepared by the following method.

As raw materials, the powders of bismuth oxide ($Bi_2O_3$), sodium carbonate ($Na_2CO_3$), titanium oxide ($TiO_2$) barium carbonate ($BaCO_3$) potassium carbonate ($K_2CO_3$), calcium carbonate ($CaCO_3$), rare earth materials such as lanthanum oxide ($La_2O_3$); niobium oxide ($Nb_2O_5$), tantalum oxide ($Ta_2O_5$), vanadium oxide ($V_2O_5$), manganese carbonate ($MnCO_3$) silicon oxide ($SiO_2$), oxide of the additive M (for example, ZnO), or the like are prepared as the raw materials if necessary, and the powders are weighted according to the target composition.

In addition, carbonates or oxalates which will turn to be oxides by firing can also be used to replace the oxides in the raw materials.

Next, the weighted raw materials are sufficiently mixed for 5 to 20 hours in an organic solvent or in pure water by means of a ball mill, and then the mixture is fully dried. The drying temperature is about 90°C as an example. However, when the above raw materials are subjected to a dry mixing, the drying step can be omitted.

The dried raw materials are press molded to produce a molded body for calcinating. Alternatively, the powder is directly calcinated for about 1 hour to 20 hours at a temperature of 800 to 950 °C. Both the heating rate and the cooling rate during the calcinating process can be set to be 50°C/hour to 300°C/hour as an example. The calcinating in the present embodiment is carried out in the air, but the value of the oxygen partial pressure is not limited.

The calcinated material is sufficiently pulverized for 5 to 20 hours in the organic solvent or in the water by the ball mill or the like, and then is fully dried. The drying temperature is about 90°C.

A solution of an organic binder (such as polyvinyl alcohol: PVA) is added into the dried calcinated materials to perform the granulation. After granulating, the granulated powder is molded into a cylinder, a prism, a disc or a square plate by uniaxial press molding.

Preferably, a Cold Isostatic Pressing (CIP) can be further applied after the above steps. At that time, it is more preferable that the isostatic pressing is carried out for 1 to 3 minutes with a maximum load pressure of 98 to 343 MPa.

The obtained compact by the above steps is subjected to a thermal treatment for 2 hours to 4 hours at 400 to 800°C to vaporize the binder, and then it is sintered for 2 hours to 4 hours at 1100 to 1300°C. Both the heating rate and the cooling rate during the sintering process are set to be for example 50°C/hour to 300°C/hour. The sintering process in the present embodiment is carried out in the air, but the value of the oxygen partial pressure is not limited.

In addition, when the sintering process is performed in a nitrogen atmosphere, an additional thermal treatment at 800 to 1000°C under an oxidative atmosphere is required. Thus, from the viewpoint of simple processes, the sintering process is preferred to be performed in air.

The obtained sintered compact is polished according to the requirements, and electrodes are formed on the two main faces. The electrodes can be formed by coating an electrode paste and then baking. Besides, the electrodes also can be formed by deposition or sputtering deposition.

Figure 1 shows a structure of part of the PTC thermistor using the semiconductor ceramic composition according to the present embodiment. PTC thermistor 1 includes ceramic body 2 and electrodes 3a and 3b, wherein, ceramic body 2 comprises the $BaTiO_3$ based semiconductor ceramic composition of the present invention, and electrodes 3a and 3b are formed on the opposite two main surfaces of the ceramic body 2. Electrodes 3a and 3b can be formed with a single-layered structure or a multi-layered structure which is made of conducting materials such as Cu, Ni, Al, Cr, Zn, Ag, Ni-Cr alloy, Ni-Cu alloy, or the like. In addition, the shape of PTC thermistor 1 shown in Figure 1 is in a disk shape, and it also can be in a cuboid shape or the like. Further, the electrodes 3a and 3b can be formed by plating, sputtering, deposition, screen printing or the like. These electrodes 3a and 3b are electrically connected with an external power supplier (which is not shown in the figures) through a wire (which is not shown in the figures) or the like.

PTC thermistor 1 according to the present embodiment can be manufactured by the following method as an example. Firstly, after the above mentioned semiconductor ceramic composition is prepared, it is processed into a specified size according to the requirements to form ceramic compact 2. Next, PTC thermistor 1 as shown in Figure 1 can be obtained by depositing electrodes 3a and 3b on the ceramic compact 2.

The semiconductor ceramic composition according to the present embodiment can be used in a heater element or an element for detecting overheats, but it also can be applied in the other elements.

In addition, the present invention is not limited to the above embodiment. For example, as long as the semiconductor ceramic composition satisfies the above formulas (2) to (7) and contains Ca and M (at least one selected from Mg, Al, Fe, Co, Cu and Zn) within the above range, the properties will not be influenced even if inevitable impurities are mixed. For example, zirconia ball is used as the grinding media during the wet mixing and pulverizing, and thus zirconia is likely to be mixed into the mixture with an amount of about 0.2 to 0.3 wt%, but it will not affect the properties of the composition. Similarly, Sr, Ni and the like contained in the body materials with a trace amount of about 10wt ppm are likely to be mixed into the mixture, but they will not affect the properties of the composition.

Further, the semiconductor ceramic composition of the present embodiment may contain Pb as the impurity. However, the amount of Pb is preferably 1wt% or less, and it is more preferable that no Pb is contained. This is because the volatilization of Pb during the firing process or the discharge of Pb into the environment after it is distributed in the market as a PTC thermistor and then abandoned can be inhibited to be a minimum, and the above amount of Pb is preferred from the viewpoint of low pollution, environmental friendliness and ecology.

[Examples 1 to 88 and Comparative Examples 1 to 39]

$BaCO_3$ $TiO_2$, $Bi_2O_3$, $Na_2CO_3$, $K_2CO_3$, $CaCO_3$, $SiO_2$, $MnCO_3$, oxides of RE (such as $Y_2O_3$), oxides of TM (such as $Nb_2O_5$) and oxides of M (such as MgO) were prepared as the raw materials, and then were respectively weighted to have a composition after the sintering process as shown in Tables 1 to 8. The resultant mixture was subjected to a wet mixing process in ethanol by using a ball mill followed by a drying process and a calcinating process at 800°C for 2 hours.

After the calcinated materials were subjected to a wet pulverizing process in pure water by using a ball mill, the mixture was dehydrated to dry and then granulated with binders such as PVA to provide a granulated powder. The granulated powder was molded into a cylindrical shape (diameter of 17mm $\times$ thickness of 1.0mm) with a uniaxial press machine and then sintered at 1200°C in air for 2 hours to obtain a sintered compact.

A paste of Ag-Zn was coated on both faces of the sintered compact by screen printing and baked at 500 to 800°C in air to form the electrodes. After that, the temperature characteristic of the resistivity is measured from 25°C to 280°C. In addition, a voltage was slowly applied between the electrodes at an ambient temperature of 25°C to measure the withstand voltage (breakdown voltage). The withstand voltage $V_0$ (V/mm) was obtained by dividing the measured value by the thickness of the semiconductor ceramic composition (its unit was mm).

Further, a 20V of DC voltage was applied for 1000 hours as the electrical current test, and then the resistivity before test $\rho_0$ and the resistivity after test $\rho_1$ were measured at an ambient temperature of 25°C to obtain the difference $\Delta\rho$ (=$\rho_1$-$\rho_0$), and thereby the resistance change rate $\Delta\rho/\rho_0$ was calculated. The results were shown in Table 1 to 8.

[Example 74]

The semiconductor ceramic composition was prepared as in Example 1 and the same assessments were done as in Examples 1 to 88 except that the sintering process was performed in a nitrogen atmosphere and a thermal treatment was further performed at 800°C in air. The obtained results were shown in Table 9.

It could be known from Table 1 that y representing the range of A was related to the Curie temperature. Further, A represented at least one element selected from the group consisting of Na and K. Based on Examples 1 to 9, it could be seen that when the range of A was $0.007 \leq y \leq 0.125$, the Curie point shifted to a temperature higher than the Curie temperature of $BaTiO_3$ of 120°C. In addition, the bigger the y was, the more the Curie point would shift to a higher temperature and the resistivity at 25°C tended to increase slightly. In Comparative Example 1 where the range of A was less than 0.007, the resistivity at 25°C was small and the Curie point did not shift to a temperature higher than 120°C. In addition, in Comparative Example 8 where the range of A was higher than 0.125, the resistivity at 25°C was found to exceed 500Ωcm to a great extent. Further, based on Examples 10 to 14, when A was Na or K, the shifting amounts of the Curie point towards a higher temperature were different while resistivity at 25°C or the resistance change rate was almost the same.

In addition, it could be known that x representing the range of element Bi was related to y representing the range of A. It could be known from Examples 1 to 9 that when the range of x was $0.750y \leq x \leq 1.50y$, the Curie point shifted to a temperature higher than the Curie temperature of $BaTiO_3$ of 120°C, the resistivity at 25°C was 500Ωcm or less, the withstand voltage was 400V/mm or more, and the resistance change rate $\Delta\rho/\rho_0$ was kept to be 20% or less. Further, in the cases where y was constant, it could be seen that the more the x was, the more the resistivity at 25°C tended to increase slightly. In Comparative Examples 2, 4 and 6 where the range of x was less than 0.75y, the resistivity at 25°C was small and the withstand voltage was lower than 400V/mm. Moreover, in the Comparative Examples 3, 5 and 7 where the range of x was over 1.5y, the resistivity at 25°C increased and the value was over 500Ωcm.

[Table 1]

| Sample No. | y [mol] | x [mol] | m | Ca [mol] | M(Mg) [mol] | w+z [mol] | Si [mol] | Mn [mol] | Resistivity at 25°C [Ωcm] | Tc [°C] | A Na or K | Resistance change rate $\Delta\rho/\rho_0$ [%] | $V_0$ [V/mm] | Note |
|---|---|---|---|---|---|---|---|---|---|---|---|---|---|---|
| Comparative Example 1 | 0.005 | 0.0075 | | | | | | | 310 | 120 | | 17 | 408 | Curie point× |
| Comparative Example 2 | | 0.0049 | | | | | | | 315 | 122 | | 17 | 300 | $V_0$× |
| Example 1 | | 0.0053 | | | | | | | 333 | 125 | | 12 | 403 | |
| Example 2 | 0.007 | 0.0070 | | | | | | | 350 | 125 | | 12 | 410 | |
| Example 3 | | 0.0105 | | | | | | | 347 | 125 | | 11 | 464 | |
| Comparative Example 3 | | 0.0112 | | | | | | | 3.2E+04 | - | | - | - | Resistivity at 25°C× |
| Comparative Example 4 | | 0.0350 | | | | | | | 378 | 125 | | 19 | 302 | $V_0$× |
| Example 4 | | 0.0375 | | | | | | | 395 | 130 | | 18 | 402 | |
| Example 5 | 0.050 | 0.0500 | | | | | | | 440 | 140 | | 11 | 418 | |
| Example 6 | | 0.0750 | | | | | | | 443 | 155 | | 13 | 652 | |
| Comparative Example 5 | | 0.0800 | 0.999 | 0.055 | 0.001 | 0 | 0 | 0 | 6.5E+04 | - | Na | - | - | Resistivity at 25°C× |
| Comparative Example 6 | | 0.0875 | | | | | | | 423 | 155 | | 19 | 296 | $V_0$× |
| Example 7 | 0.125 | 0.0938 | | | | | | | 483 | 180 | | 13 | 415 | |
| Example 8 | | 0.1250 | | | | | | | 486 | 200 | | 16 | 425 | |
| Example 9 | | 0.1875 | | | | | | | 481 | 220 | | 16 | 625 | |
| Comparative Example 7 | | 0.2000 | | | | | | | 8.3E+04 | - | | - | - | Resistivity at 25°C× |
| Comparative Example 8 | 0.127 | 0.0953 | | | | | | | 1.5E+06 | - | | - | - | Resistivity at 25°C× |

(continued)

| Sample No. | y[mol] | x [mol] | m | Ca [mol] | M(Mg) [mol] | w+z [mol] | Si [mol] | Mn [mol] | Resistivity at 25°C [Ωcm] | Tc [°C] | A Na or K | Resistance change rate $\Delta\rho/\rho_0$ [%] | $V_0$ [V/mm] | Note |
|---|---|---|---|---|---|---|---|---|---|---|---|---|---|---|
| Example 10 | 0.007 | 0.0105 | | | | | | | 334 | 125 | | 16 | 518 | |
| Example 11 | 0.030 | 0.0450 | | | | | | | 457 | 150 | K | 13 | 435 | |
| Example 12 | 0.050 | 0.0750 | | | | | | | 450 | 185 | | 14 | 648 | |
| Example 13 | 0.100 | 0.1500 | | | | | | | 488 | 220 | | 13 | 452 | |
| Example 14 | 0.125 | 0.1875 | | | | | | | 480 | 245 | | 14 | 613 | |

It could be known from Table 2 that the ratio m of Ba site (the total molar number of Ba, Bi, A, and RE) relative to Ti site (the total molar number of Ti and TM) in formula (1) was related to the resistivity at 25°C. In Examples 8, 15 and 16 where the range of m was $0.950 \leq m \leq 1.050$, the resistivity at 25°C was small, the withstand voltage was 400V/mm or more and the resistance change rate $\Delta\rho/\rho_0$ was changed with an extent of 20% or less. In Comparative Example 11 where m was less than 0.950, it could be found that the resistivity at 25°C was higher than 500$\Omega$cm. In Comparative Example 12 where m was more than 1.050, it could be found that the withstand voltage was lower than 400V/mm.

[Table 2]

| Sample No. | y [mol] | x [mol] | m | Ca [mol] | M(Mg) [mol] | w+z [mol] | Si [mol] | Mn [mol] | Resistivity at 25°C [Ωcm] | Tc [°C] | A Na or K | Resistance change rate $\Delta\rho/\rho_0$ [%] | $V_0$ [V/mm] | Note |
|---|---|---|---|---|---|---|---|---|---|---|---|---|---|---|
| Comparative Example 9 | 0.125 | 0.125 | 0.940 | 0.055 | 0.001 | 0 | 0 | 0 | 5.0E+04 | - | Na | - | - | Resistivity at 25°C× |
| Example 15 | | | 0.950 | | | | | | 477 | 200 | | 12 | 436 | |
| Example 8 | | | 0.999 | | | | | | 486 | 200 | | 16 | 425 | |
| Example 16 | | | 1.050 | | | | | | 465 | 200 | | 15 | 429 | |
| Comparative Example 10 | | | 1.060 | | | | | | 475 | 200 | | 13 | 354 | $V_0$× |

It could be known from Table 3 that the range of the sub-component Ca was related to the resistivity at 25°C. In Examples 8, 17 and 18 where the range of Ca was 0.001mol or more and 0.055mol or less, the resistivity at 25°C was small, the withstand voltage was 400V/mm or more and the resistance change rate $\Delta\rho/\rho_0$ was changed with an extent of 20% or less. In Comparative Example 11 where the range of Ca was less than 0.001mol, the resistivity at 25°C increased. In Comparative Example 12 where the range of Ca was higher than 0.055mol, the withstand voltage was lower than 400V/mm.

[Table 3]

| Sample No. | y [mol] | x [mol] | m | Ca [mol] | M(Mg) [mol] | w+z [mol] | Si [mol] | Mn [mol] | Resistivity at 25°C [Ωcm] | Tc [°C] | A Na or K | Resistance change rate $\Delta\rho/\rho_0$ [%] | $V_0$ [V/mm] | Note |
|---|---|---|---|---|---|---|---|---|---|---|---|---|---|---|
| Comparative Example 11 | | | | 1.0008 | | | | | 5.5E+04 | - | | - | - | Resistivity at 25°C× |
| Example 17 | | | | 0.001 | | | | | 454 | 200 | | 12 | 435 | |
| Example 18 | 0.125 | 0.125 | 0.999 | 0.030 | 0.001 | 0 | 0 | 0 | 483 | 200 | Na | 13 | 415 | |
| Example 8 | | | | 0.055 | | | | | 486 | 200 | | 16 | 425 | |
| Comparative Example 12 | | | | 0.058 | | | | | 478 | 200 | | 13 | 275 | $V_0$× |

EP 3 202 746 A1

14

According to Table 4, it could be known that the range of sub-component M (at least one selected from Mg, Al, Fe, Co, Cu and Zn) was related to the resistivity at 25°C and the resistance change rate $\Delta\rho/\rho_0$. In Examples 8, 19 to 35 where the amount of M was 0.0005mol or more and 0.005mol or less, the resistivity at 25°C was small, the withstand voltage was 400V/mm or more and the resistance change rate $\Delta\rho/\rho_0$ was changed with an extent of 20% or less even if any of Mg, Al, Fe, Co, Cu and Zn was added. In Comparative Examples 13, 15, 17, 19, 21 and 23 where the amount of M was less than 0.0005mol, both the resistivity at 25°C and the increase extent of the resistance change rate were insufficient. In addition, in Comparative Examples 14, 16, 18, 20, 22 and 24 where the amount of M was higher than 0.005mol, the resistivity at 25°C increased and it was higher than 500Ωcm. Besides, when the additive amount of M was within the specified range, the same effect could be obtained even several raw materials such as Mg and Zn were used.

[Table 4]

| Sample No. | y [mol] | x [mol] | m | Ca [mol] | M | M [mol] | w+z [mol] | Si [mol] | Mn [mol] | Resistivity at 25°C [$\Omega$cm] | Tc [°C] | A Na or K | Resistance change rate $\Delta\rho/\rho_0$ [%] | $V_0$ [V/mm] | Note |
|---|---|---|---|---|---|---|---|---|---|---|---|---|---|---|---|
| Comparative Example 13 | 0.125 | 0.125 | 0.999 | 0.055 | Mg | 0.0001 | 0 | 0 | 0 | 967 | 200 | Na | 33 | 448 | Resistance change rate× |
| Example 19 | | | | | | 0.0005 | | | | 487 | | | 17 | 468 | |
| Example 8 | | | | | | 0.001 | | | | 486 | | | 16 | 425 | |
| Example 20 | | | | | | 0.005 | | | | 457 | | | 16 | 441 | |
| Comparative Example 14 | | | | | | 0.006 | | | | 4.0E+03 | | | - | - | Resistivity at 25°C× |
| Comparative Example 15 | 0.125 | 0.125 | 0.999 | 0.055 | Al | 0.0001 | 0 | 0 | 0 | 858 | 200 | Na | 32 | 450 | Resistance change rate× |
| Example 21 | | | | | | 0.0005 | | | | 466 | | | 15 | 417 | |
| Example 22 | | | | | | 0.001 | | | | 460 | | | 13 | 408 | |
| Example 23 | | | | | | 0.005 | | | | 431 | | | 13 | 436 | |
| Comparative Example 16 | | | | | | 0.006 | | | | 5.0E+03 | | | - | - | Resistivity at 25°C× |
| Comparative Example 17 | 0.125 | 0.125 | 0.999 | 0.055 | Fe | 0.0001 | 0 | 0 | 0 | 1000 | 200 | Na | 33 | 454 | Resistance change rate× |
| Example 24 | | | | | | 0.0005 | | | | 477 | | | 15 | 429 | |
| Example 25 | | | | | | 0.001 | | | | 464 | | | 10 | 433 | |
| Example 26 | | | | | | 0.005 | | | | 442 | | | 10 | 404 | |
| Comparative Example 18 | | | | | | 0.006 | | | | 5.0E+03 | | | - | - | Resistivity at 25°C× |

| Sample No. | y [mol] | x [mol] | m | Ca [mol] | M | M [mol] | w+z [mol] | Si [mol] | Mn [mol] | Resistivity at 25°C [$\Omega$cm] | Tc [°C] | A Na or K | Resistance change rate $\Delta\rho/\rho_0$ [%] | $V_0$ [V/mm] | Note |
|---|---|---|---|---|---|---|---|---|---|---|---|---|---|---|---|
| Comparative Example 19 | 0.125 | 0.125 | 0.999 | 0.055 | Co | 0.0001 | 0 | 0 | 0 | 739 | 200 | Na | 31 | 425 | Resistance change rate× |
| Example 27 | | | | | | 0.0005 | | | | 417 | | | 15 | 436 | |
| Example 28 | | | | | | 0.001 | | | | 406 | | | 17 | 470 | |
| Example 29 | | | | | | 0.005 | | | | 403 | | | 15 | 459 | |
| Comparative Example 20 | | | | | | 0.006 | | | | 4.0E+03 | | | - | - | Resistivity at 25°C× |
| Comparative Example 21 | 0.125 | 0.125 | 0.999 | 0.055 | Cu | 0.0001 | 0 | 0 | 0 | 608 | 200 | Na | 30 | 411 | Resistance change rate× |
| Example 30 | | | | | | 0.0005 | | | | 398 | | | 15 | 411 | |
| Example 31 | | | | | | 0.001 | | | | 377 | | | 10 | 454 | |
| Example 32 | | | | | | 0.005 | | | | 343 | | | 6 | 410 | |
| Comparative Example 22 | | | | | | 0.006 | | | | 2.0E+03 | | | - | - | Resistivity at 25°C× |
| Comparative Example 23 | 0.125 | 0.125 | 0.999 | 0.055 | Zn | 0.0001 | 0 | 0 | 0 | 772 | 200 | Na | 32 | 412 | Resistance change rate× |
| Example 33 | | | | | | 0.0005 | | | | 498 | | | 15 | 441 | |
| Example 34 | | | | | | 0.001 | | | | 482 | | | 9 | 412 | |
| Example 35 | | | | | | 0.005 | | | | 428 | | | 6 | 414 | |
| Comparative Example 24 | | | | | | 0.006 | | | | 3.0E+03 | | | - | - | Resistivity at 25°C× |

According to Examples 36 to 77 in Table 5, it could be known that when the total amount of RE and TM, i.e., (w+z), was 0.010 or less, a decreasing effect of the resistivity at 25°C would be provided. In addition, in Comparative Examples 25 to 37 where (w+z) was higher than 0.010, the resistivity at 25°C was larger than 500Ωcm. Besides, it could be known from Examples 72 to 77 that even if (w+z) was the same value, the case in which RE and TM were added with the same amount provided a smaller resistivity at 25°C.

[Table 5]

| Sample No. | y [mol] | x [mol] | m | Ca [mol] | M(Mg) [mol] | Si [mol] | Mn [mol] | RE | TM | w [mol] | z [mol] | Resistivity at 25°C [Ωcm] | Tc [°C] | A Na or K | Resistance change rate $\Delta\rho/\rho_0$ [%] | $V_0$ [V/mm] | Note |
|---|---|---|---|---|---|---|---|---|---|---|---|---|---|---|---|---|---|
| Example 36 | | | | | | | | | | 0.001 | 0 | 386 | 200 | | 17 | 528 | |
| Example 37 | 0.125 | 0.125 | 0.999 | 0.055 | 0.001 | 0 | 0 | Y | | 0.005 | 0 | 376 | 200 | Na | 12 | 555 | |
| Example 38 | | | | | | | | | | 0.010 | 0 | 345 | 200 | | 9 | 527 | |
| Comparative Example 25 | | | | | | | | | | 0.012 | 0 | 4.8E+04 | - | | - | - | Resistivity at 25°C× |
| Example 39 | | | | | | | | | | 0.001 | 0 | 421 | 200 | | 13 | 521 | |
| Example 40 | | | | | | | | | | 0.005 | 0 | 363 | 200 | | 9 | 570 | |
| Example 41 | 0.125 | 0.125 | 0.999 | 0.055 | 0.001 | 0 | 0 | La | | 0.010 | 0 | 336 | 200 | Na | 12 | 535 | |
| Comparative Example 26 | | | | | | | | | | 0.012 | 0 | 8.0E+04 | - | | - | - | Resistivity at 25°C× |
| Example 42 | | | | | | | | | | 0.001 | 0 | 448 | 200 | | 17 | 499 | |
| Example 43 | | | | | | | | | | 0.005 | 0 | 419 | 200 | | 13 | 538 | |
| Example 44 | 0.125 | 0.125 | 0.999 | 0.055 | 0.001 | 0 | 0 | Ce | | 0.010 | 0 | 398 | 200 | Na | 9 | 577 | |
| Comparative Example 27 | | | | | | | | | | 0.012 | 0 | 7.0E+04 | - | | - | - | Resistivity at 25°C× |
| Example 45 | | | | | | | | | | 0.001 | 0 | 489 | 200 | | 15 | 514 | |
| Example 46 | | | | | | | | | | 0.005 | 0 | 472 | 200 | | 17 | 500 | |
| Example 47 | 0.125 | 0.125 | 0.999 | 0.055 | 0.001 | 0 | 0 | Pr | | 0.010 | 0 | 453 | 200 | Na | 16 | 531 | |
| Comparative Example 28 | | | | | | | | | | 0.012 | 0 | 4.0E+04 | - | | - | - | Resistivity at 25°C× |
| Example 48 | | | | | | | | | | 0.001 | 0 | 398 | 200 | | 12 | 535 | |
| Example 49 | | | | | | | | | | 0.005 | 0 | 369 | 200 | | 11 | 498 | |
| Example 50 | 0.125 | 0.125 | 0.999 | 0.055 | 0.001 | 0 | 0 | Nd | | 0.010 | 0 | 333 | 200 | Na | 10 | 509 | |
| Comparative Example 29 | | | | | | | | | | 0.012 | 0 | 7.0E+04 | - | | - | - | Resistivity at 25°C× |

(continued)

| Sample No. | y [mol] | x [mol] | m | Ca [mol] | M(Mg) [mol] | Si [mol] | Mn [mol] | RE | TM | w [mol] | z [mol] | Resistivity at 25°C [Ωcm] | Tc [°C] | A Na or K | Resistance change rate $\Delta\rho/\rho_0$ [%] | $V_0$ [V/mm] | Note |
|---|---|---|---|---|---|---|---|---|---|---|---|---|---|---|---|---|---|
| Example 51 | | | | | | | | | | 0.001 | 0 | 412 | 200 | | 10 | 554 | |
| Example 52 | | | | | | | | | | 0.005 | 0 | 421 | 200 | | 8 | 529 | |
| Example 53 | 0.125 | 0.125 | 0.999 | 0.055 | 0.001 | 0 | 0 | Sm | | 0.010 | 0 | 378 | 200 | Na | 7 | 578 | |
| Comparative Example 30 | | | | | | | | | | 0.012 | 0 | 5.0E+04 | - | | - | - | Resistivity at 25°C× |
| Example 54 | | | | | | | | | | 0.001 | 0 | 422 | 200 | | 17 | 587 | |
| Example 55 | | | | | | | | | | 0.005 | 0 | 452 | 200 | | 11 | 547 | |
| Example 56 | 0.125 | 0.125 | 0.999 | 0.055 | 0.001 | 0 | 0 | Gd | | 0.010 | 0 | 409 | 200 | Na | 13 | 547 | |
| Comparative Example 31 | | | | | | | | | | 0.012 | 0 | 3.0E+04 | - | | - | - | Resistivity at 25°C× |
| Example 57 | | | | | | | | | | 0.001 | 0 | 452 | 200 | | 16 | 519 | |
| Example 58 | | | | | | | | | | 0.005 | 0 | 413 | 200 | | 12 | 583 | |
| Example 59 | 0.125 | 0.125 | 0.999 | 0.055 | 0.001 | 0 | 0 | Dy | | 0.010 | 0 | 386 | 200 | Na | 10 | 540 | |
| Comparative Example 32 | | | | | | | | | | 0.012 | 0 | 4.0E+04 | - | | - | - | Resistivity at 25°C× |
| Example 60 | | | | | | | | | | 0.001 | 0 | 407 | 200 | | 14 | 568 | |
| Example 61 | | | | | | | | | | 0.005 | 0 | 353 | 200 | | 12 | 561 | |
| Example 62 | 0.125 | 0.125 | 0.999 | 0.055 | 0.001 | 0 | 0 | Er | | 0.010 | 0 | 333 | 200 | Na | 10 | 583 | |
| Comparative Example 33 | | | | | | | | | | 0.012 | 0 | 5.5E+04 | - | | - | - | Resistivity at 25°C× |
| Example 63 | 0.125 | 0.125 | 0.999 | 0.055 | 0.001 | 0 | 0 | | V | 0 | 0.001 | 448 | 200 | Na | 18 | 583 | |
| Example 64 | | | | | | | | | | 0 | 0.005 | 382 | 200 | | 13 | 558 | |
| Example 65 | | | | | | | | | | 0 | 0.010 | 325 | 200 | | 17 | 507 | |
| Comparative Example 34 | | | | | | | | | | 0 | 0.012 | 1.1E+05 | - | | - | - | Resistivity at 25°C× |

(continued)

| Sample No. | y [mol] | x [mol] | m | Ca [mol] | M(Mg) [mol] | Si [mol] | Mn [mol] | RE | TM | w [mol] | z [mol] | Resistivity at 25°C [Ωcm] | Tc [°C] | A Na or K | Resistance change rate $\Delta\rho/\rho_0$ [%] | $V_0$ [V/mm] | Note |
|---|---|---|---|---|---|---|---|---|---|---|---|---|---|---|---|---|---|
| Example 66 | 0.125 | 0.125 | 0.999 | 0.055 | 0.001 | 0 | 0 | | Nb | 0 | 0.001 | 353 | 200 | Na | 13 | 507 | |
| Example 67 | | | | | | | | | | 0 | 0.005 | 332 | 200 | | 9 | 533 | |
| Example 68 | | | | | | | | | | 0 | 0.010 | 299 | 200 | | 11 | 582 | |
| Comparative Example 35 | | | | | | | | | | 0 | 0.012 | 4.0E+04 | - | | - | - | Resistivity at 25°C× |
| Example 69 | 0.125 | 0.125 | 0.999 | 0.055 | 0.001 | 0 | 0 | | Ta | 0 | 0.001 | 443 | 200 | Na | 17 | 527 | |
| Example 70 | | | | | | | | | | 0 | 0.005 | 417 | 200 | | 13 | 512 | |
| Example 71 | | | | | | | | | | 0 | 0.010 | 391 | 200 | | 15 | 581 | |
| Comparative Example 36 | | | | | | | | | | 0 | 0.012 | 7.0E+04 | - | | - | - | Resistivity at 25°C× |
| Example 72 | 0.125 | 0.125 | 0.999 | 0.055 | 0.001 | 0 | 0 | Gd | Nb | 0.0025 | 0.0025 | 198 | 200 | Na | 13 | 559 | |
| Example 73 | | | | | | | | | | 0.001 | 0.004 | 213 | 200 | | 11 | 567 | |
| Example 74 | | | | | | | | | | 0.004 | 0.001 | 272 | 200 | | 9 | 554 | |
| Example 75 | | | | | | | | | | 0.005 | 0.005 | 192 | 200 | | 9 | 499 | |
| Example 76 | | | | | | | | | | 0.002 | 0.008 | 203 | 200 | | 12 | 575 | |
| Example 77 | | | | | | | | | | 0.008 | 0.002 | 203 | 200 | | 15 | 511 | |
| Comparative Example 37 | | | | | | | | | | 0.006 | 0.006 | 5.0E+04 | - | | - | - | Resistivity at 25°C× |

According to Examples 8 and 78 to 82 in Table 6, it could be known that an effect of decreasing the resistivity at 25°C would be provided by adding Si in a ratio of 0.035mol or less in terms of element relative to 1mol of Ti site (the total molar number of Ti and TM). Further, in the case that Si was contained in a ratio of 0.005mol or more and 0.02mol or less, the effect of decreasing the resistivity at 25°C was improved, and thus it was preferable.

[Table 6]

| Sample No. | y [mol] | x [mol] | m | Ca [mol] | M(Mg) [mol] | w+z [mol] | Si [mol] | Mn [mol] | Resistivity at 25°C [Ωcm] | Tc [°C] | A Na or K | Resistance change rate $\Delta\rho/\rho_0$ [%] | $V_0$ [V/mm] |
|---|---|---|---|---|---|---|---|---|---|---|---|---|---|
| Example 8 | | | | | | | 0 | | 486 | 200 | | 16 | 425 |
| Example 78 | | | | | | | 0.005 | | 326 | 200 | | 12 | 435 |
| Example 79 | 0.125 | 0.125 | 0.999 | 0.055 | 0.001 | 0 | 0.010 | 0 | 317 | 200 | Na | 9 | 444 |
| Example 80 | | | | | | | 0.020 | | 312 | 200 | | 11 | 462 |
| Example 81 | | | | | | | 0.030 | | 365 | 200 | | 13 | 483 |
| Example 82 | | | | | | | 0.035 | | 466 | 200 | | 9 | 453 |

23

According to Examples 8 and 83 to 86 in Table 7, it could be known that an effect of improving PTC jump would be provided by adding Mn in a ratio of 0.0015mol or less in terms of element relative to 1mol of Ti site (the total molar number of Ti and TM). Further, in the cases that Mn was contained in a ratio of 0.0002mol or more and 0.0010mol or less, the effect of improving PTC jump was increased, and thus it was preferable.

[Table 7]

| Sample No. | y[mol] | x[mol] | m | Ca[mol] | M(Mg) [mol] | w+z [mol] | Si [mol] | Mn [mol] | Resistivity at 25°C [Ωcm] | Tc [°C] | A Na or K | Resistance change rate $\Delta\rho/\rho_0$ [%] | $V_0$ [V/mm] | PTC jump [digit] |
|---|---|---|---|---|---|---|---|---|---|---|---|---|---|---|
| Example 8 | 0.125 | 0.125 | 0.999 | 0.055 | 0.001 | 0 | 0 | 0 | 486 | 200 | Na | 16 | 425 | 2.51 |
| Example 83 | | | | | | | | 0.0002 | 386 | 200 | | 12 | 455 | 3.31 |
| Example 84 | | | | | | | | 0.0005 | 374 | 200 | | 9 | 441 | 3.89 |
| Example 85 | | | | | | | | 0.0010 | 342 | 200 | | 11 | 467 | 4.03 |
| Example 86 | | | | | | | | 0.0015 | 365 | 200 | | 13 | 483 | 3.98 |

It could be seen from Examples 8 and 87 in Table 8 that a composition obtained in the case when the atmosphere during the sintering process was set as a nitrogen atmosphere ($PO_2=10^{-7}$ atm) had almost the same property as that sintered in air.

[Table 8]

| Sample No. | y[mol] | x[mol] | m | Ca[mol] | M(Mg) [mol] | w+z [mol] | Si [mol] | Mn [mol] | Resistivity at 25°C [$\Omega$cm] | Tc [°C] | A Na or K | Resistance change rate $\Delta\rho/\rho_0$ [%] | $V_0$ [V/mm] | Note |
|---|---|---|---|---|---|---|---|---|---|---|---|---|---|---|
| Example 8 | 0.125 | 0.125 | 0.999 | 0.055 | 0.001 | 0 | 0 | 0 | 486 | 200 | Na | 16 | 425 | In air |
| Example 87 | | | | | | | | | 304 | 200 | | 12 | 434 | In nitrogen atmosphere |

DESCRIPTION OF REFERENCE NUMERALS

1       PTC thermistor

2       ceramic body

3a, 3b   electrodes

**Claims**

1. A semiconductor ceramic composition represented by the following formula (1),

$$(Ba_vBi_xA_yRE_w)_m(Ti_uTM_z)O_3 \qquad (1)$$

wherein, in the formula (1), A represents at least one element selected from the group consisting of Na and K,

RE represents at least one element selected from the group consisting of Y, La, Ce, Pr, Nd, Sm, Gd, Dy and Er,
TM represents at least one element selected from the group consisting of V, Nb and Ta,
u, v, w, x, y, z and m satisfy the following formulas (2) to (7),

$$0.750y \leq x \leq 1.50y \qquad (2)$$

$$0.007 \leq y \leq 0.125 \qquad (3)$$

$$0 \leq (w+z) \leq 0.010 \qquad (4)$$

$$v+x+y+w=1 \qquad (5)$$

$$u+z=1 \qquad (6)$$

$$0.950 \leq m \leq 1.050 \qquad (7)$$

Ca is further contained in a ratio of 0.001mol or more and 0.055mol or less relative to 1mol of Ti site in terms of element; and an additive M is contained in a ratio of 0.0005mol or more and 0.005mol or less in terms of element, wherein, the Ti site is the total molar number of Ti and TM, and M is at least one selected from Mg, Al, Fe, Co, Cu and Zn.

2. The semiconductor ceramic composition of claim 1, wherein,
Si is further contained in the semiconductor ceramic composition in a ratio of 0.035mol or less relative to 1mol of Ti site in terms of element, wherein, the Ti site is the total molar number of Ti and TM.

3. The semiconductor ceramic composition of claim 1 or 2, wherein,
Mn is further contained in the semiconductor ceramic composition in a ratio of 0.0015mol or less relative to 1mol of Ti site in terms of element, wherein, the Ti site is the total molar number of Ti and TM.

4. A PTC thermistor comprising a ceramic body and electrodes formed on two main faces of the ceramic body, wherein, the ceramic body is formed by using the semiconductor ceramic composition of any one of claims 1 to 3.

1

3a

2

3b

**Fig.1**

Europäisches
Patentamt
European
Patent Office
Office européen
des brevets

**EUROPEAN SEARCH REPORT**

Application Number

EP 17 15 4799

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/031993 A1 (UCHIDA YOSHIO [JP] ET AL) 11 February 2010 (2010-02-11) * See Examples;; claims 1-10 * | 1-4 | INV. C04B35/462 C04B35/468 C04B35/626 H01C7/02 |
| X | JP 2012 004496 A (HITACHI METALS LTD) 5 January 2012 (2012-01-05) * the whole document * | 1-4 | |
| X | DE 11 2014 001227 T5 (TDK CORP [JP]) 7 January 2016 (2016-01-07) * See Examples; claims 1-5; tables 1-9 * | 1-4 | |
| X | US 2012/175361 A1 (INO KENTARO [JP] ET AL) 12 July 2012 (2012-07-12) * See examples; claims 1-22; tables 1-5 * | 1-4 | |
| X | EP 2 159 207 A1 (MURATA MANUFACTURING CO [JP]) 3 March 2010 (2010-03-03) * See Examples; claims 1-4; tables 1-4 * | 1-4 | TECHNICAL FIELDS SEARCHED (IPC) C04B H01C |
| X | US 2011/210815 A1 (ABE NAOAKI [JP] ET AL) 1 September 2011 (2011-09-01) * See examples starting from paragraph 0060; claims 1-20; tables 1, 2 * | 1-4 | |
| E | EP 3 127 889 A1 (TDK CORP [JP]) 8 February 2017 (2017-02-08) * the whole document * | 1-4 | |
| X | EP 2 966 050 A1 (TDK CORP [JP]) 13 January 2016 (2016-01-13) * See examples; claims 1-5; tables 1-8 * | 1-4 | |

-/--

The present search report has been drawn up for all claims

| Place of search | Date of completion of the search | Examiner |
|---|---|---|
| Munich | 10 March 2017 | Fortunati, Taddiano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 17 15 4799

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2012 224537 A (HITACHI METALS LTD) 15 November 2012 (2012-11-15) * the whole document * | 1-4 | |

TECHNICAL FIELDS
SEARCHED       (IPC)

The present search report has been drawn up for all claims

| Place of search | Date of completion of the search | Examiner |
|---|---|---|
| Munich | 10 March 2017 | Fortunati, Taddiano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 4799

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2017

| Patent document cited in search report | | Publication date | Patent family member(s) | | Publication date |
|---|---|---|---|---|---|
| US 2010031993 | A1 | 11-02-2010 | CN | 101542762 A | 23-09-2009 |
| | | | EP | 2096687 A1 | 02-09-2009 |
| | | | JP | 4867618 B2 | 01-02-2012 |
| | | | JP | 2008135501 A | 12-06-2008 |
| | | | TW | 200832768 A | 01-08-2008 |
| | | | US | 2010031993 A1 | 11-02-2010 |
| | | | WO | 2008066189 A1 | 05-06-2008 |
| JP 2012004496 | A | 05-01-2012 | NONE | | |
| DE 112014001227 | T5 | 07-01-2016 | CN | 105026336 A | 04-11-2015 |
| | | | DE | 112014001227 T5 | 07-01-2016 |
| | | | JP | 5930118 B2 | 08-06-2016 |
| | | | JP | WO2014141814 A1 | 16-02-2017 |
| | | | KR | 20150103726 A | 11-09-2015 |
| | | | US | 2016027560 A1 | 28-01-2016 |
| | | | WO | 2014141814 A1 | 18-09-2014 |
| US 2012175361 | A1 | 12-07-2012 | CN | 102482160 A | 30-05-2012 |
| | | | EP | 2487142 A1 | 15-08-2012 |
| | | | JP | 5757239 B2 | 29-07-2015 |
| | | | KR | 20120093834 A | 23-08-2012 |
| | | | US | 2012175361 A1 | 12-07-2012 |
| | | | US | 2016060174 A1 | 03-03-2016 |
| | | | WO | 2011043344 A1 | 14-04-2011 |
| EP 2159207 | A1 | 03-03-2010 | CN | 101687714 A | 31-03-2010 |
| | | | EP | 2159207 A1 | 03-03-2010 |
| | | | JP | 5152182 B2 | 27-02-2013 |
| | | | KR | 20100009584 A | 27-01-2010 |
| | | | US | 2010084619 A1 | 08-04-2010 |
| | | | WO | 2008152976 A1 | 18-12-2008 |
| US 2011210815 | A1 | 01-09-2011 | CN | 102245535 A | 16-11-2011 |
| | | | EP | 2371788 A1 | 05-10-2011 |
| | | | JP | 5327553 B2 | 30-10-2013 |
| | | | KR | 20110083702 A | 20-07-2011 |
| | | | US | 2011210815 A1 | 01-09-2011 |
| | | | WO | 2010067865 A1 | 17-06-2010 |
| EP 3127889 | A1 | 08-02-2017 | CN | 106431390 A | 22-02-2017 |
| | | | EP | 3127889 A1 | 08-02-2017 |
| | | | JP | 2017034140 A | 09-02-2017 |
| | | | KR | 20170016805 A | 14-02-2017 |
| | | | US | 2017040092 A1 | 09-02-2017 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 17 15 4799

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2017

| Patent document cited in search report | | Publication date | Patent family member(s) | | Publication date |
|---|---|---|---|---|---|
| EP 2966050 | A1 | 13-01-2016 | CN | 105321641 A | 10-02-2016 |
| | | | EP | 2966050 A1 | 13-01-2016 |
| | | | JP | 2016027618 A | 18-02-2016 |
| | | | KR | 20160004949 A | 13-01-2016 |
| | | | US | 2016005517 A1 | 07-01-2016 |
| JP 2012224537 | A | 15-11-2012 | NONE | | |

EPO FORM P0459

For more details about this annex : see Official Journal of the European Patent Office, No. 12/82

page 2 of 2

**EP 3 202 746 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S56169301 A
- JP 2012209292 A